**Europäisches Patentamt**

**European Patent Office**

**Office européen des brevets**

(11) Veröffentlichungsnummer: **0 289 694 B1**

# (12) EUROPÄISCHE PATENTSCHRIFT

(45) Veröffentlichungstag der Patentschrift: **11.09.91**

(51) Int. Cl.5: **F16M 11/10, G03B 17/56**

(21) Anmeldenummer: **87890091.9**

(22) Anmeldetag: **07.05.87**

(54) **Kippvorrichtung für eine eine Filmkamera tragende Wiege.**

(43) Veröffentlichungstag der Anmeldung:
**09.11.88 Patentblatt 88/45**

(45) Bekanntmachung des Hinweises auf die
Patenterteilung:
**11.09.91 Patentblatt 91/37**

(84) Benannte Vertragsstaaten:
**AT CH DE FR GB IT LI**

(56) Entgegenhaltungen:
**FR-A- 2 311 250**
**GB-A- 174 056**
**GB-A- 846 970**
**GB-A- 1 386 670**
**US-A- 3 740 011**

**MACHINE DESIGN, Band 57, Nr. 15, 27. Juni
1985, Seiten 12,20, Cleveland, Ohio, US;
"Chains and chain drives"**

(73) Patentinhaber: **ARNOLD & RICHTER CINE
TECHNIK GMBH & CO. BETRIEBS KG.
Türkenstrasse 89
W-8000 München 40(DE)**

(72) Erfinder: **Blaschek, Otto
D-8011 Aschheim
Wornach(DE)**
Erfinder: **Wallner, Kurt
D-8057 Eching
Wietersheim(DE)**

(74) Vertreter: **Gibler, Ferdinand, Dipl.Ing. Dr.
techn.
Dorotheergasse 7/14
A-1010 Wien(AT)**

## Beschreibung

Die Erfindung betrifft eine Kippvorrichtung für eine eine Filmkamera tragende Wiege mit einer Lagerhalterung zur Führung der bogenförmigen Kufen der Wiege auf mit der Lagerhalterung verbundenen Rollen und einem biegsamen, über einen Zahnradantrieb betätigbaren und endseitig mit der Wiege verbundenen Zugmittel, wobei das Zugmittel als über ein Kettenrad antreibbare Gliederkette mit Rollen ausgebildet ist. Eine derartige Kippvorrichtung ist beispielsweise aus der US-A-3 740 011 bekanntgeworden, wobei die Gliederkette von einem Ausgleichszahnrad und dem Antriebskettenrad getragen wird. Diese Vorrichtung ist jedoch mit dem Nachteil verbundene, daß die Entstehung eines ruckartigen Antriebes nicht zuverlässig ausgeschlossen werden kann. Bei einer Kippvorrichtung gemäß DE-B-2 615 647 ist eine mit der Filmkamera verbunden Wiege mit ihren kreisbogenförmigen Kufen jeweils zwischen an einer Lagerhalterung fixierten Rollenpaaren einsgespannt und somit entlang des Kreisbogens relativ zur Lagerhalterung verstellbar. Jeweils im Längsendbereich der Wiege ist ein biegsames Zugmittel in Form eines Zahnriemens befestigt, der mit einem in der Lagerhalterung gelagerten Zahnradantrieb in Eingriff steht. Der Zahnradantrieb ist an einer verschwenkbar an der Lagerhalterung befestigten Tragschiene gelagert. Eine derartige Ausführung einer Kippvorrichtung hat den Nachteil einer last- und temperaturabhängigen Dehnung des Zahnriemens, sodaß eine häufige Nachspannung desselben durchzuführen ist. Außerdem unterliegt der Zahnriemen in seiner Länge einer stark unterschiedlichen Abnützung, da die Verschwenkbereiche in einer geringfügigen Abweichung von der Horizontalen wesentlich häufiger sind als in den extremen Verschwenkbereichen. Zusätzlich liegt durch die Einspannung der Kufen der Wiege zwischen einem Rollenpaar eine genaue Führung lediglich in der Verschwenkebene vor. In der Ebene senkrecht dazu liegt keine genaue und reibungsarme Führung vor.

Es ist aber auch bekannt, als biegsames Zugmittel zum Verschwenken der Wiege ein Seil zu verwenden. Dies hat jedoch vor allem den Nachteil, daß die Seilspannung genau eingehalten werden muß. Läßt sie nach, muß erst nachjustiert werden.

Es ist weiters auch noch bekannt an der Wiege ein Zahnradsegment anzubringen, das mit einem auf der Lagerhalterung gelagerten Zahnrad in Eingriff steht. Dabei ist von Nachteil, daß bei Nachstellung in vertikaler Richtung durch Auffahren des Zahnrades auf das Zahnsegment die Leichtgängigkeit des Antriebes verloren geht oder daß bei horizontaler Nachstellung des Zahnsegment im Laufe der Zeit vom Zahnrad abrutscht.

Die Aufgabe der vorliegenden Erfindung liegt daher in der Schaffung einer Kippvorrichtung der eingangs beschriebenen Art, die unter Vermeidung der bekannten Nachteile mit relativ geringem Aufwand herstellbar ist und noch nach längerem Einsatz eine genaue Kippbewegung der Filmkamera ermöglicht.

Diese Aufgabe der Erfindung bei einer Kippvorrichtung der eingangs genannten Art wird dadurch gelöst, daß die Teilung des Kettenrades kleiner als die Teilung der Gliederkette ausgebildet ist. Mit einer derartigen Abstimmung von Gliederkette und Kettenrad wird die Entstehung eines ruckartigen Antriebes zuverlässig ausgeschlossen, da - sobald eine Zahnflanke des Kettenrades gerade vom Kettenglied freikommt - die nächstfolgende Zahnflanke bereits kraftschlüssig mit einem Kettenglied in Verbindung steht.

Durch die Kombination einer Gliederkette als Zugmittel und einem in diese eingreifenden Kettenrad ist unter Vermeidung einer Längenänderung eine präzise, spiel freie Schwenkbewegung auf die Wiege übertragbar. Die solcherart erzielbare Präzision und Spielfreiheit kann insbesondere in ihrem Langzeitverhalten verbessert werden, wenn in weiterer Ausgestaltung der Erfindung Kettenrad und/oder Rollen gehärtet sind.

Gemäß einer vorteilhaften Weiterbildung der Erfindung weisen die Kufen in Längsrichtung verlaufend, in einer entsprechenden rillenförmigen Vertiefung der Rollen eingreifende Vorsprünge auf. Die Nut/Rillenführung ermöglicht die problemlose Aufnahme von Querkräften unter Beibehaltung einer exakten Längsführung. Außerdem sind die Kufen exakt in der rillenförmigen Vertiefung führbar.

Gemäß einer weiteren vorteilhaften Ausführungsvariante der Erfindung ist vorgesehen, daß die der Wiege abgewandte Seite der Gliederkette durch ein biegsames, endseitig in beiden Endbereichen mit der Wiege verbundenes Band abgedeckt ist, wobei das Band im Bereich des Zahnradantriebes über Umlenkrollen von der Gliederkette distanziert und zwischen Zahnradantrieb und der Lagerhalterung geführt ist. Mit einer derartigen Abdeckung wird zuverlässig jedes die Schwenkbewegung störende Einziehen von Fremdgegenständen durch die Gliederkette zuverlässig vermieden. Außerdem sind damit auch Verletzungen so gut wie ausgeschlossen. Da das Band im Bereich des Kettenrades von diesem distanziert ist, wird der Eingriff des Kettenrades in die Gliederkette in keiner Weise gestört.

Das Band kann entsprechend einer anderen Ausführungvariante der Erfindung elastisch ausgebildet sein und unter Zugspannung stehen. Damit ist sichergestellt, daß das Band zur vollständigen Abdeckung stets an die Gliederkette angepreßt wird.

Gemäß einer weiteren bevorzugten Ausführungsvariante der Erfindung ist vorgesehen, daß die Gliederkette und das Band in einer bogenförmigen, mit der Wiege verbundenen Abstützung geführt sind. Mit einer derartigen, dieselbe Krümmung wie die Kufen aufweisenden Abstützung ist sichergestellt, daß sowohl die Gliederkette als auch das Band - unabhängig von der Lage der Wiege zur Lagerhalterung - immer in der optimalen Lage zum Kettenrad bzw. den Umlenkrollen geführt ist.

Die Gliederkette kann gemäß wieder einer anderen Ausbildungsvariante der Erfindung im Bereich des Kettenrades um eine senkrecht zu dessen Achse verstell- und fixierbare Spannrolle geführt sein. Mit dieser Spannrolle ist eine rasche und genau einstellbare Spannung der Gliederkette ohne Zerlegung der Kippvorrichtung möglich.

Es kann aber auch wenigstens ein Ende der Gliederkette mit einem Spannschloß verbunden sein, das mit seinem anderen Ende mit der Wiege verbunden ist. Auch mit dieser Ausbildung ist eine besonders einfach ausführbare Kettenspannung möglich.

Gemäß einer anderen vorteilhaften Ausführungsform der Erfindung stehen die Kufen lediglich an ihrer der Wiege abgewandten Seite mit den an der Lagerhalterung befestigten Rollen in Verbindung. Mit einem derart lediglich auf den Rollen aufliegenden und durch die Gliederkette, die ja um das auf der Lagerhalterung gehaltene Kettenrad geführt ist, an die Rollen angepreßten Schwenkkopf ist eine besonders leichte, reibungsarme Schwenkbewegung durchführbar.

Schließlich besteht noch eine weitere Ausführungsvariante der Erfindung darin, daß eine mit der Lagerhalterung verbundene Kurbel über eine Kardanwelle mit dem Zahnradantrieb verbunden und seitlich in horizontaler Ebene ausschwenkbar ausgebildet ist. Durch diese Ausbildung wird der Schwenkbereich der Wiege mitsamt der daran fixierten Filmkamera erweitert.

Im folgenden wird die Erfindung anhand von in den Zeichnungen näher dargestellten Ausführungsbeispielen beschrieben.

Es zeigen:

Fig. 1 eine Seitenansicht mit teilweisem Längsschnitt einer erfindungsgemäß ausgebildeten Kippvorrichtung für eine eine Filmkamera tragende Wiege.

Fig. 2 einen Querschnitt durch die Kippvorrichtung entlang der Linie B-B

Fig. 3 eine alternative Ausführungsform einer Kufenlagerung bzw. -ausbildung

Fig. 4 eine Seitenansicht eines Kettenrades und einer Gliederkette gemäß der Erfindung und

Fig. 5 einen Längsschnitt durch die Lagerhalterung entlang der Linie A-A in Fig. 1 mit einer ausschwenkbaren Kurbel.

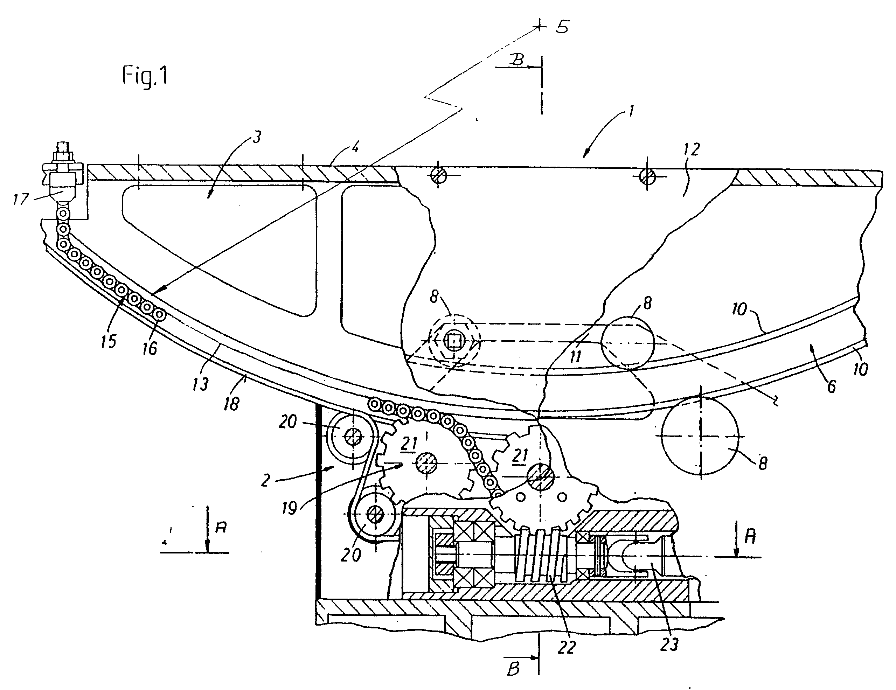

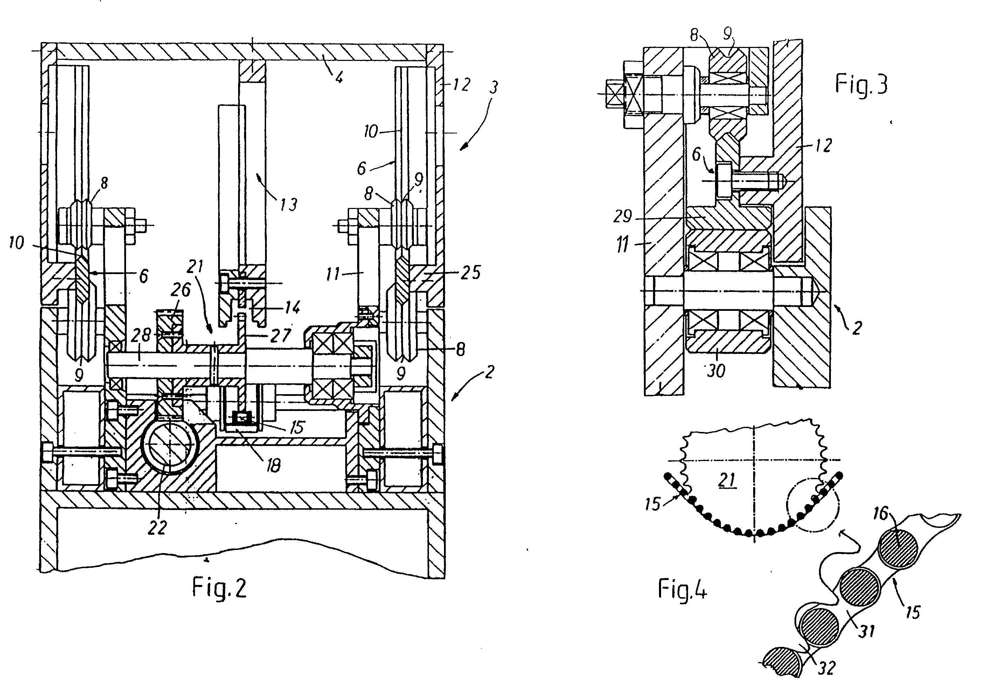

Eine in Fig. 1 ersichtliche Kippvorrichtung 1 besteht im wesentlichen aus einer mit einem nicht dargestellten Stativ in Verbindung stehenden Lagerhalterung 2 und einer zu dieser verschwenk- bzw. kippbaren Wiege 3. Diese an ihrer oberen Deckfläche 4 zur Aufnahme einer Filmkamera vorgesehene Wiege 3 weist an ihrer Unterseite zwei in der Schwenkachse 5 zueinander distanzierte Kufen 6 auf, die sowohl an ihrer Oberals auch Unterseite in Kufenlängsrichtung verlaufende, in eine entsprechende rillenförmige Vertiefung 9 der Rollen 8 (Fig. 2) eingreifende Vorsprünge 10 aufweisen. Die die Kufen 6 jeweils beidseitig einspannenden Rollen 8 sind auf einer mit der Lagerhalterung 2 verbundenen Halterung 11 drehbar gelagert. Die Wiege 3 weist zwei seitlich der Deckfläche 4 angeordnete und mit dieser verbundene Seitenwände 12 auf.

Wie insbesondere in Fig. 2 ersichtlich, ist mittig zwischen den beiden Seitenwänden 12 der Wiege 3 eine bogenförmige Abstützung 13 mit der Deckfläche 4 verbunden, wobei die Abstützung eine den Kufen 6 entsprechende Krümmung aufweist. Diese bogenförmige Abstützung 13 weist an ihrer Unterseite eine Ausnehmung 14 zur Aufnahme einer in Fig. 1 ersichtlichen Gliederkette 15 auf. Ein Ende der vorzugsweise gehärtete Rollen 16 aufweisenden Gliederkette 15 ist mit einem Spannschloß 17 verbunden, das seinerseits mit der Deckfläche 4 der Wiege 3 verbunden ist. Die der Wiege 3 abgewandte Seite der Gliederkette 15 ist durch ein biegsames, endseitig in beiden Endbereichen mit der Wiege 3 verbundenes Band 18 abgedeckt, das im Bereich eines in der Lagerhalterung 2 befindlichen Zahnradantriebes 19 über Umlenkrollen 20 von der Gliederkette 15 distanziert zwischen Zahnradantrieb 19 und der Lagerhalterung geführt ist. Das Band ist außerdem elastisch ausgebildet und steht für eine sichere Abdeckung der Gliederkette 15 ständig unter Zugspannung. Die U-förmige Ausnehmung 14 in der bogenförmigen Abstützung 13 dient zusätzlich zur Aufnahme und Führung der Gliederkette 15 auch zur Aufnahme und Führung des Bandes 18. Der zur Übertragung der Zugkräfte auf die Gliederkette 15 vorgesehene Zahnradantrieb 19 besteht aus drei hintereinander angeordneten, vorzugsweise gehärteten Kettenrädern 21, wobei die Gliederkette 15 von der Oberseite der äußeren Kettenräder 21 zur Unterseite des mittigen Kettenrades 21 geführt ist.

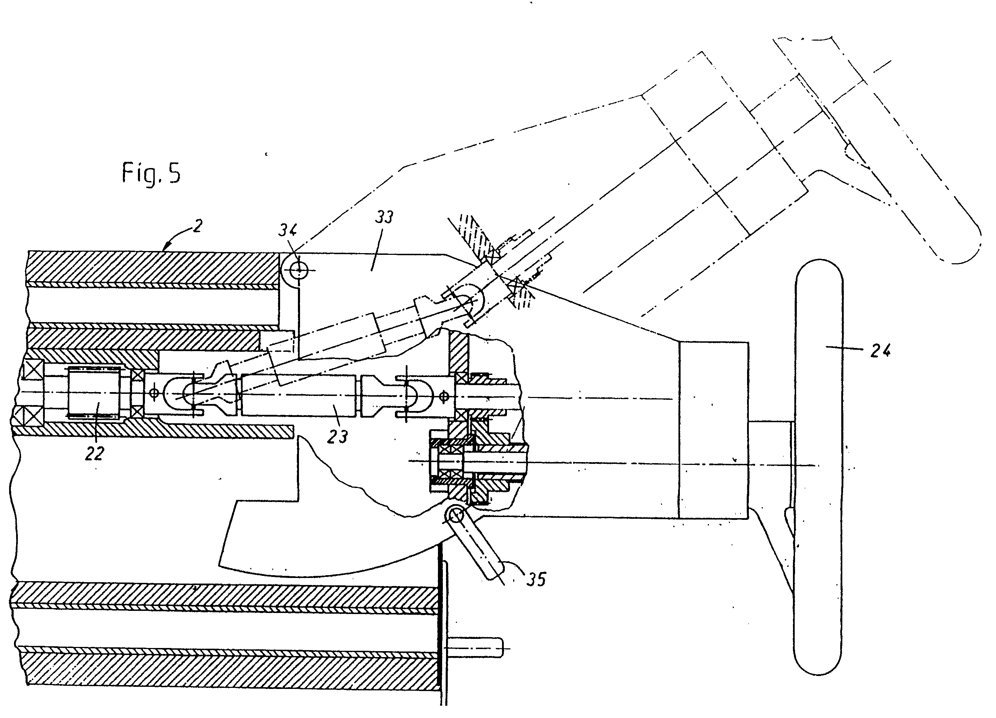

Das mittige Kettenrad 21 steht über das Zahnrad 26 mit einem Ritzel 22 in Eingriff, das über ein Kardangelenk 23 angetrieben wird und somit ein Ausschwenken der in Fig. 5 dargestellten Kurbel 24 um ihre Längsachse ermöglicht.

Wie in Fig. 2 ersichtlich, sind die Kufen 10 in ihrem mittigen, unteren Bereich über einen Steg 25 mit der angrenzenden Seitenwand 12 verbunden. Auf diese Weise ist eine exakte, ruhige und spielfreie Führung der Kufen in den rillenförmigen Vertiefungen 9 der Rollen 8 möglich. Das mittige Kettenrad 21 ist aus zwei in Achsrichtung voneinander distanzierten Zahnrädern 26,27 gebildet, wovon das letztgenannte mit der Gliederkette 15 und das andere Zahnrad 26 mit dem Ritzel 22 in Eingriff steht. Die mit dem Kettenrad 21 verbundene Welle 28 ist jeweils endseitig über entsprechende Kugellager in der Lagerhalterung 2 gelagert.

Die in Fig. 3 alternativ ausgeführten Kufen 6 weisen lediglich an ihrer Oberseite einen Vorsprung 10 auf, der in eine entsprechende rillenförmige Vertiefung 9 der Rolle 8 zu liegen kommt. Das untere Ende der Kufen 6 weist jedoch abweichend vom beschriebenen Ausführungsbeispiel gemäß Fig. 1 und 2 eine verbreiterte Abstützfläche 29 auf, die ebenso wie die Kufe 6 gekrümmt ausgebildet ist. Diese Abstützfläche 26 liegt auf den beiden unteren Rollen 30 auf, die zylinderförmig ausgebildet sind.

Die in Fig. 4 vergrößert dargestellte Gliederkette 15 besteht aus einzelnen miteinander verbundenen Gliedern 31, die jeweils im Bereich einer gehärteten Rolle 16 gelenkig miteinander verbunden sind. Dabei ist es zur Vermeidung eines ruckartigen Antriebes beim aufeinanderfolgenden Kämmen des Kettenrades mit der Gliederkette 15 wesentlich, daß die Teilung der Gliederkette 15 und des Kettenrades 21 unterschiedlich ist, d.h. daß die Teilkreise anders ausgebildet sind. Hiedurch wird erreicht, daß dann, wenn eine Zahnflanke des Kettenrades 21 von der Gliederkette 15 freikommt, die entsprechende Flanke des nächsten Zahnes 32 des Kettenrades 21 bereits kraftschlüssig in die Rollen 16 der Gliederkette 15 eingreift. Die Größe des Teilungsunterschiedes ist eine Funktion der Anzahl der in die Gliederkette 15 insgesamt eingreifenden Zähne 32. Dies ist wiederum abhängig vom Außendurchmesser des Kettenrades 21. Bevorzugt ist, daß die Teilung des Kettenrades 21 kleiner als die Teilung der Gliederkette 15 ausgebildet ist.

Wie mit strichpunktierten Linien in Fig. 5 angedeutet, ist die über eine Kardanwelle 23 mit dem Ritzel 22 in Verbindung stehende Kurbel 24 zur Verschwenkung der Wiege 3 seitlich verschwenkbar. Zu diesem Zweck ist die Kurbellagerung 33 mit Hilfe eines Gelenkes 34 an der Lagerhalterung 2 befestigt. Mit 35 ist ein Knebel zur Fixierung der gewählten Winkelstellung bezeichnet. Mit dieser gelenkigen Lagerung der Kurbel 24 wird der Schwenkbereich der Wiege in vorteilhafter Weise erweitert. Normalerweise sind solche Kameraschwenks nur in Ausnahmefällen erwünscht, sodaß für solche Fälle die Kurbel aus dem Schwenkweg seitlich herausgeklappt werden kann.

**Patentansprüche**

1. Kippvorrichtung für eine eine Filmkamera tragende Wiege (3) mit einer Lagerhalterung (2) zur Führung der bogenförmigen Kufen (16) der Wiege auf mit der Lagerhalterung (2) verbundenen Rollen (8) und einem biegsamen, über einen Zahnradantrieb (19) betätigbaren und enseitig mit der Wiege (3) verbundenen Zugmittel, wobei das Zugmittel als über ein Kettenrad (21) antreibbare Gliederkette (15) mit Rollen (16) ausgebildet ist, dadurch gekennzeichnet, daß die Teilung des Kettenrades (21) kleiner als die Teilung der Gliederkette (15) ausgebildet ist.

2. Kippvorrichtung nach Anspruch 1, dadurch gekennzeichnet, daß das Kettenrad (21) und/oder die Rollen (16) gehärtet sind.

3. Kippvorrichtung nach Anspruch 1 oder 2, dadurch gekennzeichnet, daß die Kufen (6) in Längsrichtung verlaufende, in eine entsprechende rillenförmige Vertiefung (9) der Rollen (8) eingreifende Vorsprünge (10) aufweisen.

4. Kippvorrichtung nach einem der Ansprüche 1 bis 3, dadurch gekennzeichnet, daR die der Wiege (3) abgewandte Seite der Gliederkette (15) durch ein biegsames, endseitig in beiden Endbereichen mit der Wiege (3) verbundenes Band (18) abgedeckt ist, wobei das Band (18) im Bereich des Zahnradantriebes (19) über Umlenkrollen (20) von der Gliederkette (15) distanziert zwischen Zahnradantrieb (19) und der Lagerhalterung geführt ist.

5. Kippvorrichtung nach Anspruch 4, dadurch gekennzeichnet, daß das Band (18) elastisch ausgebildet ist und unter Zugspannung steht.

6. Kippvorrichtung nach einem der Ansprüche 1 bis 5, dadurch gekennzeichnet, daß die Gliederkette (15) und das Band (18) in einer bogenförmigen, mit der Wiege (3) verbundenen Abstützung (13) geführt ist.

7. Kippvorrichtung nach einem der Ansprüche I bis 6, dadurch gekennzeichnet, daß die Gliederkette (15) im Bereich des Kettenrades (21) um eine senkrecht zu dessen Achse verstell- und fixierbare Spannrolle geführt ist.

8. Kippvorrichtung nach einem der Ansprüche 1 bis 7, dadurch gekennzeichnet, daß wenigstens ein Ende der Gliederkette (15) mit einem Spannschloß (17) verbunden ist, das mit seinem anderen Ende mit der Wiege (3) verbunden ist.

9. Kippvorrichtung nach einem der Ansprüche 1 bis 7, dadurch gekennzeichnet, daß die Kufen (6) lediglich an ihrer der Wiege (3) abgewandten Seite mit den an der Lagerhalterung (2) befestigten Rollen (8) in Verbindung stehen.

10. Kippvorrichtung nach einem der Ansprüche 1 bis 9, dadurch gekennzeichnet, daß eine mit der Lagerhalterung (2) verbundene Kurbel (24) über eine Kardanwelle (23) mit dem Zahnradantrieb (19) verbunden und seitlich in horizontaler Ebene ausschwenkbar ausgebildet ist.

## Claims

1. Tilting device for a cradle (3) carrying a film camera, with a bearing mounting (2) for guiding the arcuate rockers (6) of the cradle on rollers (8) connected to the bearing mounting (2), and with a flexible tension means actuable via a gearwheel drive (19) and connected at one end to the cradle (3), the tension means being designed as a link chain (15) drivable via a chain wheel (21) and having rollers (16), characterised in that the pitch of the chain wheel (21) is made smaller than the pitch of the link chain (15).

2. Tilting device according to Claim 1, characterised in that the chain wheel (21) and/or the rollers (16) are hardened.

3. Tilting device according to Claim 1 or 2, characterised in that the rockers (6) have projections (10) extending in the longitudinal direction and engaging into a corresponding groove-shaped recess (9) of the rollers (8).

4. Tilting device according to one of Claims 1 to 3, characterised in that the side of the link chain (15) facing away from the cradle (3) is covered by a flexible band (18) connected at the ends to the cradle (3) in the two end regions, the band (18) being guided in the region of the gearwheel drive (19) at a distance from the link chain (15) between the gearwheel drive (19) and the bearing mounting via deflecting rollers (20).

5. Tilting device according to Claim 4, characterised in that the band (18) is made such that it is elastic and is under tension.

6. Tilting device according to one of Claims 1 to 5, characterised in that the link chain (15) and the band (18) are guided in an arcuate support (13) connected to the cradle (3).

7. Tilting device according to one of Claims 1 to 6, characterised in that the link chain (15) is guided in the region of the chain wheel (21) around a tensioning roller which can be adjusted and fixed perpendicularly to the axis of the said chain wheel.

8. Tilting device according to one of Claims 1 to 7, characterised in that at least one end of the link chain (15) is connected to a turnbuckle (17), which is connected by its other end to the cradle (3).

9. Tilting device according to one of Claims 1 to 7, characterised in that the rockers (6) are in connection with the rollers (8), fastened to the bearing mounting (2), only on their side facing away from the cradle (3).

10. Tilting device according to one of Claims 1 to 9, characterised in that a crank (24), connected to the bearing mounting (2), is connected via a cardan shaft (23) to the gearwheel drive (19) and is made such that it can swing out laterally in the horizontal plane.

## Revendications

1. Dispositif basculant pour un berceau (3) portant une caméra de cinéma, avec un support de palier (2) pour le guidage des flasques (16) du berceau sur des rouleaux (8) liés au support de palier (2) et un moyen d'entraînement flexible, actionnable par l'intermédiaire d'une commande par engrenages et lié d'un côté au berceau, le moyen d'entraînement étant réalisé sous forme d'une chaîne à maillons (15) à rouleaux (16) entraînable par l'intermédiaire d'une roue à chaîne (21), caractérisé par le fait que le pas de la roue à chaîne (21) est réalisé plus petit que le pas de la chaîne à maillons (15).

2. Dispositif basculant selon la revendication 1, caractérisé par le fait que la roue à chaîne (2) et/ou les rouleaux (16) sont durcis.

3. Dispositif basculant selon la revendication 1 ou 2, caractérisé par le fait que les flasques (6) présentent des saillies (10) s'étendant en direction longitudinale et s'engageant dans un évidement (9) correspondant, en forme de gorge, des rouleaux (8).

4. Dispositif basculant selon l'une des revendications 1 à 3, caractérisé par le fait que le côté de la chaîne à maillons (15) écarté du berceau (3) est recouvert par une bande (18) flexible, liée en bout avec le berceau (3) dans les deux zones d'extrémité, la bande (18) passant à distance de la chaîne à maillons (15), entre la commande à engrenages (19) et le support de palier, sur des rouleaux de renvoi (20) dans la zone de la commande à engrenage (19).

5. Dispositif basculant selon la revendication 4, caractérisé par le fait que la bande (18) est réalisée élastiquement et demeure sous tension de traction.

6. Dispositif basculant selon l'une des revendications 1 à 5, caractérisé par le fait que la chaîne à maillons (15) et la bande (18) passent dans un support (13) cintré relié au berceau (3).

7. Dispositif basculant selon l'une des revendications 1 à 6, caractérisé par le fait que la chaîne à maillons (15) passe dans la zone de la roue de chaîne (21) autour d'un rouleau tendeur réglable et fixable perpendiculairement à l'axe de la roue.

8. Dispositif basculant selon l'une des revendications 1 à 7, caractérisé par le fait qu'au moins une extrémité de la chaîne à maillons (15) est reliée à un manchon de tension (17) qui est relié par son autre extrémité au berceau (3).

9. Dispositif basculant selon l'une des revendications 1 à 7, caractérisé par le fait que les flasques (6) sont en liaison avec les rouleaux (18) fixés au support de palier (2) uniquement par leur côté écarté du berceau (3).

10. Dispositif basculant selon l'une des revendications 1 à 9, caractérisé par le fait qu'une manivelle (24) reliée au support de palier (2) est reliée par un arbre à cardan (23) avec la commande à engrenages (19) et est réalisée orientable latéralement dans un plan horizontal.

Fig.1

Fig.2

Fig.3

Fig.4

EP 0 289 694 B1

Fig. 5

EP 0 289 694 B1